# EUROPÄISCHE PATENTANMELDUNG

(11) **EP 1 285 924 A1**
(43) Veröffentlichungstag der Anmeldung: **26.02.2003**
(21) Anmeldenummer: 02016149.3
(22) Anmeldetag: 20.07.2002
(51) Int. Cl.: C07F 5/02

(54) **Verfahren zur Herstellung von Aryl- und Alkyl-Bor-Verbindungen in Mikroreaktoren**

(30) Priorität: 21.08.2001 DE 10140857
(71) Anmelder: Clariant GmbH, 65929 Frankfurt am Main (DE)
(72) Erfinder: Koch, Manfred, 65817 Eppstein-Niederjosbach (DE); Wehle, Detlef, 65611 Brechen (DE); Scherer, Stefan, 64572 Büttelborn (DE); Forstinger, Klaus, 64832 Babenhausen (DE); Meudt, Andreas, 65439 Flörsheim, Weilbach (DE); Hessel, Volker, 65510 Hünstetten (DE); Werner, Bernd, 64319 Pfungstadt (DE); Löwe, Holger, 55276 Oppenheim (DE)
(74) Vertreter: Hütter, Klaus, Dr.

(57) **Zusammenfassung**

Verfahren zur Herstellung von Aryl- und Alkyl-Bor-Verbindungen der allgemeinen Formel (II) und (III) durch Umsetzung von Aryl- und Alkylmagnesiumhalogeniden der allgemeinen Formel (I) mit Borverbindungen in Mikroreaktoren gemäß Gleichung l oder Gleichung II, 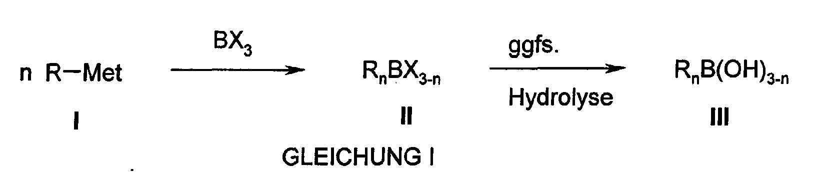 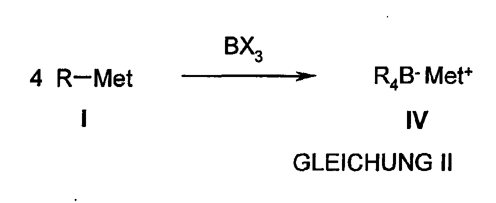 worin X = gleiche oder verschiedene Reste aus den Reihen Fluor, Chlor, Brom, lod, C₁-C₅-Alkoxy, N,N-Di(C₁-C₅-Alkyl)amino oder (C₁-C₅-Alkyl)thio,
Met = MgY mit Y = Fluor, Chlor, Brom oder lod,
n = 1,2 oder 3,
und R = geradkettiges oder verzweigtes C₁-C₆-Alkyl, mit einem Rest aus der Gruppe (RO, RR'N, Phenyl, substituiertes Phenyl, Fluor, RS) substituiertes C₁-C₆-Alkyl, Phenyl, mit einem Rest aus der Gruppe (C₁-C₆-Alkyl, C₁-C₆-Alkoxy, C₁-C₅-Thioether, Silyl, Fluor, Chlor, Dialkylamino, Diarylamino, Alkyl-aryl-amino) substituiertes Phenyl oder
substituiertes oder unsubstituiertes Hetero-Sechsring-Aryl mit einem bis zwei Stickstoffatomen oder Hetero-Fünfring-Aryl mit einem bis zwei Heteroatomen aus der Gruppe (N, O, S) oder
einem substituierten oder unsubstituierten zwei- bis dreikernigen Aromaten, bedeuten,
in temperierbaren Mikroreaktoren, deren Auslasskanäle erforderlichenfalls mit mehrere Meter langen Kapillaren oder Schläuchen verbunden sind, wobei die Reaktionslösungen während einer ausreichenden Verweilzeit intensiv vermischt werden.

## Beschreibung

Die Erfindung betrifft ein Verfahren zur Herstellung von Aryl- und Alkyl-Bor-Verbindungen (II) und (III) durch Umsetzung von Aryl- und Alkylmagnesiumhalogeniden (I) mit Borverbindungen in Mikroreaktoren gemäß Gleichung I oder Gleichung II, 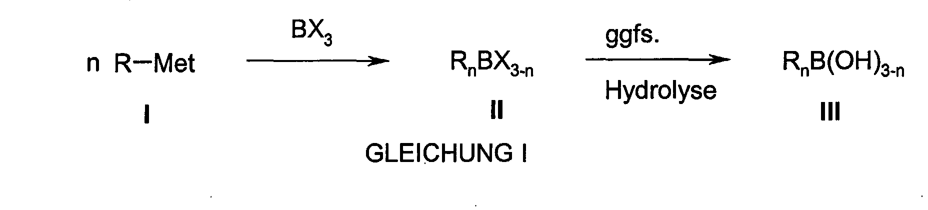 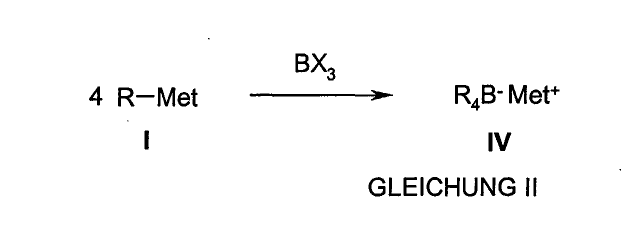 worin X = gleiche oder verschiedene Reste aus den Reihen Fluor, Chlor, Brom, lod, C₁-C₅-Alkoxy, N,N-Di(C₁-C₅-Alkyl)amino oder (C₁-C₅-Alkyl)thio,
Met = MgY mit Y = Fluor, Chlor, Brom oder lod,
n = 1, 2 oder 3,
und R = geradkettiges oder verzweigtes C₁-C₆-Alkyl, mit einem Rest aus der Gruppe (RO, RR'N, Phenyl, substituiertes Phenyl, Fluor, RS) substituiertes C₁-C₆-Alkyl, Phenyl, mit einem Rest aus der Gruppe (C₁-C₆-Alkyl, C₁-C₆-Alkoxy, C₁-C₅-Thioether, Silyl, Fluor, Chlor, Dialkylamino, Diarylamino, Alkyl-aryl-amino) substituiertes Phenyl, Hetero-Sechsring-Aryl mit einem bis zwei Stickstoffatomen, Hetero-Fünfring-Aryl mit einem bis zwei Heteroatomen aus der Gruppe (N, O, S) oder einem substituierten oder unsubstituierten zwei- bis dreikernigen Aromaten, bedeuten.

Aryl- und Alkylborverbindungen haben sich in den letzten Jahren zu sehr vielseitig einsetzbaren Synthesebausteinen entwickelt, durch deren Einsatz, z.B. in der Suzuki-Kupplung, eine Vielzahl von wirtschaftlich sehr interessanten Feinchemikalien vor allem für die Pharma- und Agro-lndustrie hergestellt werden können. Hier sind in erster Linie die Aryl- und Alkylboronsäuren zu nennen, bei denen eine Auftragung der Zahl der Anwendungen im Bereich Wirkstoffsynthese gegen eine Zeitachse in den letzten Jahren einer Exponentialfunktion entspricht. Von zunehmender Bedeutung sind aber auch Diarylborinsäuren, beispielsweise als Cokatalysatoren in der Olefinpolymerisation oder auch als Einsatzmaterial in Suzuki-Kupplungen, bei denen alle beiden Arylreste übertragen werden können.

Die Umwandlung von Aryl- und Alkylgrignardverbindungen zu Alkyl- und Arylborverbindungen sind in einer Vielzahl von Publikationen bereits beschrieben und verlaufen unter strenger Einhaltung von für den jeweiligen Fall genauestens optimierten Reaktionsbedingungen auch in guten Ausbeuten.

Nachteilig allerdings ist der Umstand, dass bei dieser Umsetzung eine breite Palette an Nebenprodukten entstehen kann und tatsächlich in Mengen, die stark von den angewandten Bedingungen abhängig sind, auch entsteht. Prinzipiell ist hier nach Hydrolyse der Reaktionsmischungen an möglichen Produkten neben den Homokupplungsprodukten, also den entsprechenden Biarylen oder Bialkylen, die Bildung von Boronsäuren, Borinsäuren, Triaryl- und Trialkylboranen und Tetraaryl- bzw. Tetraalkylboranaten zu nennen. Bis auf die letztgenannten geladenen Verbindungen sind die gewünschten Reaktionsprodukte jeweils nur unter Inkaufnahme aufwendiger Reinigungsoperationen abtrennbar, die die Ausbeute vermindern und die Herstellkosten der Produkte deutlich erhöhen.

Für den Fall der Herstellung von Aryl- oder Alkylboronsäuren gilt beispielsweise Folgendes: Da hier die Gefahr der Bildung von Biarylen bzw. Bialkylen, Borinsäuren, Boranen und sogar Boranaten besteht, bei denen gleich zwei, drei bzw. vier Äquivalente des metallorganischen Reagenzes verbraucht werden, kann auch aus diesem Grund die Ausbeute bei Nichteinhaltung optimaler Bedingungen regelrecht zusammenbrechen. In vielen Fällen werden geringe Ausbeuten schwierig aufzureinigender Rohprodukte erhalten. Entsprechendes gilt für die Herstellung von Borinsäuren, Boranen und Boranaten.

Um die voranstehend genannten Nebenreaktionen zu umgehen, muss zwangsläufig bei tiefen Temperaturen gearbeitet werden, um so die bei der Primärreaktion entstehenden Primärprodukte, im Falle der Herstellung von Boronsäuren die Aryl- oder Alkylboranate (V), vor dem Zerfall in die freien Boronsäureester oder -halogenide 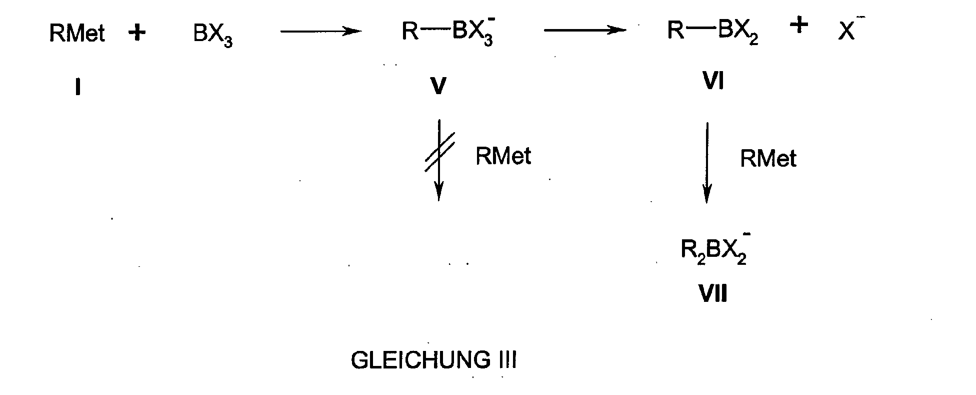 (VI) zu schützen, da letztere mit unumgesetztem BX3 um weitere metallorganische Verbindung (I) konkurrieren und so Nebenprodukte und Ausbeuteverluste bewirken würden. Entsprechendes gilt hier ganz ähnlich auch für die Herstellung höheralkylierter oder -arylierter Borverbindungen (GLEICHUNG III).

Ideale Reaktionstemperaturen liegen hierbei unter -20°C, gute Ergebnisse erhält man aber erst unter -35°C, kaum noch Nebenprodukte und reine Bor-Verbindungen werden bei Temperaturen unter -55°C erhalten. Diese Temperaturen sind technisch mit billigen Kühlverfahren wie z.B. Solekühlung nicht mehr zu erreichen, sondern müssen unter hohem Energieaufwand und auf teure Weise generiert werden. In Kombination z.B. mit der Herstellung des Grignard-Reagenzes, bei der im allgemeinen bei Rückflusstemperatur gearbeitet wird, und der Aufarbeitung, bei der sich meist eine destillative Abtrennung des Solvens anschließt, resultiert ein wenig ökonomischer und mit hohen Fertigungskosten verbundener Prozess, bei dem folgende Temperaturbereiche durchlaufen werden müssen: Raumtemperatur -> Rückfluss (Grignard-Herstellung) -> Abkühlen -> Tieftemperatur (Boronsäure-Herstellung) -> Raumtemperatur (Hydrolyse) -> Siedetemperatur (Lösungsmittelabtrennung) -> Abkühlen (Filtration oder Extraktion).

Des weiteren muss stets mit einem Überschuss an meist teurem BX₃ gearbeitet werden. Verfahrenstechnisch muss man - außer bei extrem tiefen Temperaturen - BX3 vorlegen und die Lösung der Grignard-Verbindung sehr langsam zutropfen, wobei auch diese in gekühlter Form zugetropft werden sollte. Als weiterer Erfolgsfaktor ist das Arbeiten in relativ verdünnten Lösungen zu nennen, wodurch nur geringe Raum/Zeit-Ausbeuten erzielt werden können.

Es bestand daher das Bedürfnis, ein Verfahren zur Herstellung von Aryl- und Alkyl-Bor-Verbindungen zu haben - unter Beibehaltung der Rohstoffe Alkyl- und Aryl-Grignard-Verbindungen und Borverbindungen BX₃ - bei dem idealerweise die Umsetzungstemperaturen über -30°C liegen und zudem mit hohen Konzentrationen der Reaktanden gearbeitet werden kann, ohne dass - wie bei klassischverfahrenstechnischen Herangehensweisen - größere Mengen an den vorstehend genannten Nebenprodukten gebildet werden und gleichzeitig noch möglichst hohe Ausbeuten an reinen Borverbindungen gebildet werden. Trotz vielfältiger Bemühungen war es bisher aber nicht gelungen, entsprechende Reaktionsbedingungen zu finden.

Die vorliegende Erfindung löst alle diese Aufgaben und betrifft ein Verfahren zur Herstellung von Aryl- und Alkyl-Bor-Verbindungen der allgemeinen Formel (II) und (III) durch Umsetzung von Aryl- und Alkylmagnesiumhalogeniden der allgemeinen Formel (I) mit Borverbindungen in Mikroreaktoren gemäß Gleichung I oder Gleichung II, 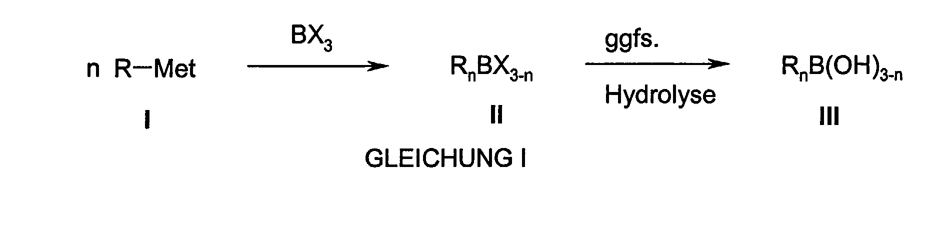 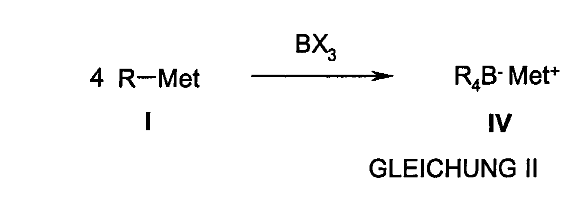 worin X = gleiche oder verschiedene Reste aus den Reihen Fluor, Chlor, Brom, lod, C₁-C₅-Alkoxy, N,N-Di(C₁-C₅-Alkyl)amino oder (C₁-C₅-Alkyl)thio,
Met = MgY mit Y = Fluor, Chlor, Brom oder lod,
n = 1, 2 oder 3,
und R = geradkettiges oder verzweigtes C₁-C₆-Alkyl, mit einem Rest aus der Gruppe {RO, RR'N, Phenyl, substituiertes Phenyl, Fluor, RS} substituiertes C₁-C₆-Alkyl- oder
Phenyl, mit einem Rest aus der Gruppe {C₁-C₆-Alkyl, C₁-C₆-Alkoxy, C₁-C₅-Thioether, Silyl, Fluor, Chlor, Dialkylamino, Diarylamino, Alkyl-aryl-amino} substituiertes Phenyl oder
substituiertes oder unsubstituiertes Hetero-Sechsring-Aryl mit einem bis zwei Stickstoffatomen, z.B. Pyridin, Picolin, Pyridazin, Pyrimidin oder Pyrazin, oder Hetero-Fünfring-Aryl mit einem bis zwei Heteroatomen aus der Gruppe: N, O, S, z.B. Pyrrol, Furan, Thiophen, Imidazol, Oxazol oder Thiazol oder
einem substituierten oder unsubstituierten zwei- bis dreikernigen Aromaten, z.B. Naphthalin, Anthracen oder Phenanthren,
bedeuten,
in temperierbaren Mikroreaktoren, insbesondere in Kombination mit einem Mikromischer, deren Auslasskanäle erforderlichenfalls mit mehrere Meter langen Kapillaren oder Schläuchen verbunden sind, wobei die Reaktionslösungen während einer ausreichenden Verweilzeit intensiv vermischt werden.

Die Aufarbeitung der gesammelten Reaktionsgemische kann durch "klassische" Aufarbeitungs- und Hydrolysemethoden erfolgen.

Erfindungsgemäß kann dieses Verfahren kontinuierlich durchgeführt werden.

Zur Durchführung des erfindungsgemäßen Verfahrens können insbesondere Durchflussreaktoren eingesetzt werden, deren Kanäle einen Durchmesser von 25 Mikrometern bis 2000 Mikrometern, insbesondere 40 Mikrometer bis 1300 Mikrometern aufweisen. Dabei wird die Durchflussrate so eingestellt, dass sich eine Verweilzeit ergibt, die dem Erreichen eines Umsatzes von mindestens 70 % entspricht. Vorzugsweise wird die Durchflussrate im Mikroreaktor so eingestellt, dass eine Verweilzeit zwischen einer Sekunde und 10 Minuten, insbesondere 10 Sekunden bis 5 Minuten, erzielt wird.

Bevorzugt werden solche Reaktoren eingesetzt, welche mit Hilfe von Technologien hergestellt werden können, die in der Herstellung von Siliciumchips angewendet werden. Es können aber auch vergleichbare Reaktoren eingesetzt werden, die aus anderen, gegenüber den Grignard-Lösungen und den Borverbindungen inerten Materialien, wie beispielsweise Granit, Keramik oder Glas oder aus metallischen Werkstoffen, wie Edelstahl oder Hastelloy, hergestellt werden. Bevorzugt werden die Mikroreaktoren hergestellt, indem dünne Siliciumstrukturen miteinander verbunden werden.

Entscheidend für die Wahl der einzusetzenden miniaturisierten Durchflussreaktoren ist die Einhaltung folgender Parameter:
- Das Reaktionsgemisch muss in jedem Volumenelement annähernd gleichmäßig vermischt werden
- Die Kanäle müssen so weit sein, dass ein ungehindertes Durchströmen möglich ist, ohne dass sich unerwünschter Druck aufbaut;
- Die Struktur der Mikroreaktoren muss in Kombination mit den eingestellten Flussraten eine ausreichende Verweilzeit ermöglichen, um einen Mindestumsatz zu erlauben
- Das System bestehend aus Mikroreaktor und Ableitungsschläuchen muss temperierbar sein.

Die erfindungsgemäßen Umwandlungen werden vorteilhaft bei Temperaturen zwischen -60°C und +80°C durchgeführt, bevorzugt bei -50°C bis +60°C, besonders bevorzugt zwischen -40°C und +40°C.

Es zeigt sich hierbei, dass die in den eingesetzten Mikroreaktoren erzielbare optimale Vermischung zu dem sehr bemerkenswerten Ergebnis führt, dass der Gehalt der resultierenden Borverbindungen an den oben genannten Nebenprodukten fast unabhängig von der Reaktionstemperatur ist. Typische Gehalte der hergestellten Borverbindungen an den genannten Nebenprodukten sind dabei im Falle der Herstellung von Boronsäuren zwischen 0,1 und 4,0 % Borinsäure, < 1 % Boran und < 1 % an Boranaten, meist werden aber deutlich höhere Reinheiten erhalten, wobei Borinsäure-Gehalte < 2 %, Boran-Gehalte < 1 % und Boranat-Anteile < 0,5 % gemessen werden. Derartige Selektivitäten sind selbst bei tiefen Temperaturen bei Anwendung "klassischer Verfahrenstechnik" nicht erreichbar.

Die Aufarbeitung kann dadurch sehr einfach gestaltet werden, dass keine Produktaufreinigungen mehr erforderlich sind. Selbst für Anwendungen mit höchsten Reinheitsansprüchen können die erhaltenen Borverbindungen direkt eingesetzt werden. Eine bevorzugte Aufarbeitungsmethode ist z.B. das Eintragen der Reaktionsmischungen in Wasser, Ansäuern mit Mineralsäure, Abdestillieren des oder der Lösungsmittel und Filtration der reinen Borverbindungen.

Im erfindungsgemäßen Verfahren zur Herstellung von Arylboronsäuren lassen sich so beispielsweise Produktreinheiten von > 99 % und Ausbeuten von >95 % erzielen.

Geeignete Lösungsmittel für die erfindungsgemäße Methode zur Herstellung von Borverbindungen sind aliphatische und aromatische Ether und Kohlenwasserstoffe und Amine, die keinen Wasserstoff am Stickstoff tragen, bevorzugt Triethylamin, Diethylether, Tetrahydrofuran, Toluol, Toluol/THF-Mischungen, Anisol und Diisopropylether, besonders bevorzugt Toluol, THF oder Diisopropylether. Bevorzugt werden Lösungen in Konzentrationen im Bereich von 1 bis 35 Gew.-%, insbesondere 5 bis 30 Gew.-%, besonders bevorzugt 8 bis 25 Gew.-%.

Das erfindungsgemäße Verfahren soll durch die nachfolgenden Beispiele erläutert werden, ohne die Erfindung darauf zu beschränken:

### Beispiel 1

### Herstellung von Phenylboronsäure aus Phenylmagnesiumchlorid und Trimethylborat

Eingesetzt wurden a) eine Lösung von Phenylmagnesiumchlorid in THF, c = 0,5 mol/l und b) eine Lösung von Trimethylborat in THF, c = 0,5 mol/l. Der eingesetzte Mikromischer war ein Einzel-Mikromischer mit 25 x 300 µm- und 40 x 300 µm-Strukturen in Nickel auf einer Kupferhinterfütterung des Instituts für Mikrotechnik Mainz. Es wurde im ersten Versuch eine Verweilzeit von 10 s eingestellt. Die beiden Lösungen sowie der Mikroreaktor wurden auf eine Temperatur von 0°C temperiert. Nach dem gründlichen Spülen der Apparatur mit insgesamt 1,5 I THF (wasserfrei) wurden insgesamt 2 I jeder Eduktlösung eingesetzt. Die erhaltene Reaktionsmischung wurde gesammelt und durch Eintragen in Wasser (330 ml), Einstellen des pH auf 4,5 und anschließendes schonendes Abdestillieren des THF bei 200 mbar aufkonzentriert. Nach Abkühlen auf 0°C, Filtration und Trocknen des Produkts bei 40°C/100 mbar wurden 116,3 g Phenylboronsäure (0,955 mol, 95,5 %) erhalten, deren Reinheit 99,2 % betrug (HPLC a/a, Gehalt an Borinsäure 0,6 %, Triphenylboran nicht nachweisbar).
Durch 5-stündiges Trocknen bei 75°C/0,5 mbar kann das Reaktionsprodukt quantitativ in das trimere Anhydrid Triphenylboroxin überführt werden, wobei exakt die berechnete Wassermenge abgegeben wird.

### Beispiele 2 bis 4

### Phenylboronsäure aus PhMgCI und B(OMe)₃- Variation der Temperatur

| Versuch | T (Edukte, Reaktor) | Isolierte Ausbeute | HPLC a/a (Reinheit) | Gehalt Borinsäure HPLC a/a |
|---|---|---|---|---|
| 2 | -20°C | 94,4 % | 98,9 % | 0,6 % |
| 1 | 0°C | 95,5 % | 99,2 % | 0,8 % |
| 3 | + 15°C | 95,1 % | 99,0 % | 0,7 % |
| 4 | + 30°C | 94,7 % | 98,9 % | 0,6 % |

⇒ keine erkennbare Temperaturabhängigkeit im untersuchten T-Bereich.

### Beispiele 5 bis 8

### Phenylboronsäure aus PhMgCI und B(OMe)₃- Variation der Verweilzeiten

| Versuch | T (Edukte, Reaktor) | Verweilzeit | Isolierte Ausbeute | HPLC a/a (Reinheit) | Gehalt Borinsäure HPLC a/a |
|---|---|---|---|---|---|
| 5 | 20°C | 5 s | 94,9 % | 98,9 % | 0,6 % |
| 6 | 20°C | 60 s | 93,9 % | 99,1 % | 0,8 % |
| 7 | 20°C | 120 s | 95,7 % | 98,9 % | 1,1 % |
| 8 | 20°C | 180 s | 94,8 % | 98,5 % | 1,3 % |

Die Auswertung der Tabelle zeigt folgenden Trend: je geringer die Verweilzeit, desto höher die Selektivität (= je höher der Fluss, desto höher die Selektivität)

### Beispiel 9

### Phenylboronsäure aus PhMgCI und B(OMe)₃ - Variation der Konzentration

| Versuch | T (Edukte, Reaktor) | Konz. Edukte | Verweilzeit | Isolierte Ausbeute | HPLC a/a (Reinheit) | Gehalt Borinsäure HPLC a/a |
|---|---|---|---|---|---|---|
| 5 | 20°C | 0,5 mol/l | 5 s | 94,9 % | 98,9 % | 0,6 % |
| 9 | 20°C | 1 mol/l | 5 s | 93,7 % | 98,4 % | 1,1 % |

Die Auswertung der Tabelle zeigt folgenden Trend: je höher die Konzentration, desto geringer die Selektivität, Effekt allerdings im Vergleich zum durch Mikroreaktionstechnik erschließbaren Verbesserungspotential gering ausgeprägt (siehe Vergleichsversuch 10).

### Beispiel 10

### Durchführung der "klassischen Umsetzung"

Die Umsetzung der Lösungen von a) Phenylmagnesiumchlorid in THF, c = 0,5 mol/l, T = 20°C und b) Trimethylborat in THF, c = 0,5 mol/l, T = 20°C wurden dergestalt umgesetzt, dass die Trimethylborat-Lösung und die Grignard-Lösung gleichzeitig in einen auf 20°C temperierten Rundkolben dosiert wurden. Die Dosierung wurde dabei so rasch vorgenommen, dass die Temperatur bei (20±5)°C gehalten werden konnte (22 min für 1,5 I Gesamtvolumen). Es wurde eine Gesamtausbeute von 83 % (incl. Nebenprodukte) erhalten, die HPLC-Analyse ergab einen Borinsäure-Gehalt von 13,8 % und einen Triphenylboran-Gehalt von 1,1 % (jeweils a/a).

### Beispiele 11 bis 13

### Phenylboronsäure aus PhMgHal und BX₃ - Variation von Hal und X

(Bedingungen: T (Edukte, Reaktor) = 20°C; Verweilzeit = 5 s)

| Versuch | Hal | X | Isolierte Ausbeute | HPLC a/a (Reinheit) | Gehalt Borinsäure HPLC a/a |
|---|---|---|---|---|---|
| 5 | Cl | OMe | 94,9 % | 98,9 % | 0,6 % |
| 11 | Br | OMe | 93,9 % | 98,7 % | 0,9 % |
| 12 | Cl | F (als BF₃ x Et₂O) | 73,2 % | 96,9 % | 2,1 % |
| 13 | Cl | OiPr | 84,5 % | 97,1 % | < 0,1 % |

### Beispiel 14

### 4-Tolylboronsäure aus pTolMgCl und B(OEt)₃

Bedingungen: T (Edukte, Reaktor) = 20°C; Verweilzeit = 5 s, c (Eduktlösungen in THF) = 0,75 mol/l. Die gesammelten organischen Phasen wurden auf Wasser gegossen, der pH mit 20 % Schwefelsäure auf 4,5 eingestellt, das Lösungsmittel bei 100 mbar abdestilliert und das Produkt durch Filtration bei 5°C isoliert. Es wurde 4-Tolylboronsäure in einer Ausbeute von 92 % erhalten, der Gehalt an Ditolylboronsäure betrug nur 0,4 % (HPLC a/a), Tritolylboran war nicht nachweisbar.

### Beispiele 15 bis 19

### Boronsäuren aus RMgCI und B(OMe)₃

Bedingungen: T (Edukte, Reaktor) = 20°C; Verweilzeit = 5 s, c (Eduktlösungen in THF) = 0,75 mol/l.

| Versuch | R | Isolierte Ausbeute | HPLC a/a (Reinheit) | Gehalt an Borinsäure |
|---|---|---|---|---|
| 15 | 4-CF3-Ph | 92,2 % | 98,9 % | 0,8 % |
| 16 | 3-F-Ph | 90,8 % | 98,7 % | 0,4 % |
| 17 | 4-Biphenyl-4'-yl | 89,1 % | 96,9 % | < 0,1 % |
| 18 | 4-MeO-Ph | 91,2 % | 97,8 % | 0,8 % |
| 19 | iPr | 71,5 % | 95,2 %* | 1,3 % |

| | | | | |
|---|---|---|---|---|
| * Analyse durch GC nach Pinakolisierung, alle Angaben in Flächenprozent. | | | | |

### Beispiel 20

### Herstellung von Diphenylborinsäure

Diphenylborinsäure lässt sich entsprechend der in Beispiel 1 angegebenen Vorschrift herstellen, wenn man a) eine Lösung von Phenylmagnesiumchlorid in THF, c = 1,0 mol/l und b) eine Lösung von Trimethylborat in THF, c = 0,5 mol/l in dem in Beispiel 1 beschriebenen Mikroreaktor zur Reaktion bringt. Die Aufarbeitung geschieht auf die schon mehrfach beschriebene Weise, indem auf Wasser gegossen, der pH auf 6,0 (Hydrolyseempfindlichkeit von Borinsäuren!) eingestellt und das Lösungsmittel schonend abdestilliert wird. Diphenylborinsäure wird nach Filtration und Trocknung in einer Ausbeute von 88 % (bez. auf Trimethylborat) erhalten, HPLC-Reinheit 97,1 %, Gehalt an Nebenprodukten: Phenylboronsäure 1,1 %, Triphenylboran 0,4 % (jeweils HPLC a/a).

### Beispiel 21

### Herstellung von Triphenylboran

Triphenylboran lässt sich entsprechend herstellen, indem man a) eine Lösung von Phenylmagnesiumchlorid in THF, c = 1,0 mol/l und b) eine Lösung von Trimethylborat in THF, c = 0,33 mol/l im mehrfach beschriebenen Mikroreaktor zur Reaktion bringt. Die Aufarbeitung geschieht auf die schon beschriebene Weise, indem auf Wasser gegossen, der pH auf 6,0 eingestellt und das Lösungsmittel schonend abdestilliert wird. Diphenylborinsäure wird nach Filtration und Trocknung in einer Ausbeute von 88 % (bez. auf Trimethylborat) erhalten, HPLC-Reinheit 97,1 %, Gehalt an Nebenprodukten: Phenylboronsäure 1,1 %, Triphenylboran 0,4 % (jeweils HPLC a/a).

## Patentansprüche

1. Verfahren zur Herstellung von Aryl- und Alkyl-Bor-Verbindungen der allgemeinen Formel (II) und (III) durch Umsetzung von Aryl- und Alkylmagnesiumhalogeniden der allgemeinen Formel (I) mit Borverbindungen in Mikroreaktoren gemäß Gleichung I oder Gleichung II, 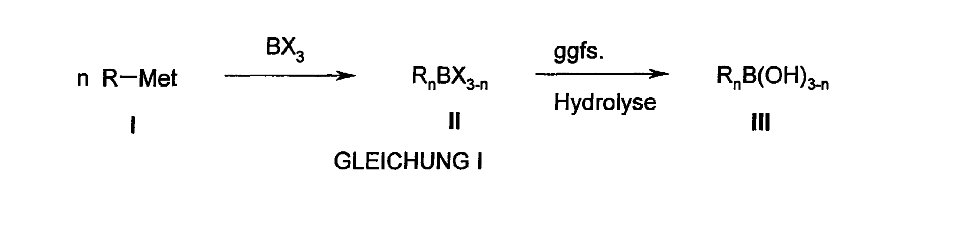 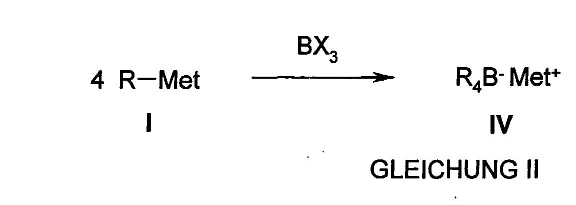 worin X = gleiche oder verschiedene Reste aus den Reihen Fluor, Chlor, Brom, lod, C₁-C₅-Alkoxy, N,N-Di(C₁-C₅-Alkyl)amino oder (C₁-C₅-Alkyl)thio,
Met = MgY mit Y = Fluor, Chlor, Brom oder lod,
n = 1, 2 oder 3,
und R = geradkettiges oder verzweigtes C₁-C₆-Alkyl, mit einem Rest aus der Gruppe (RO, RR'N, Phenyl, substituiertes Phenyl, Fluor, RS) substituiertes C₁-C₆-Alkyl, Phenyl, mit einem Rest aus der Gruppe (C₁-C₆-Alkyl, C₁-C₆-Alkoxy, C₁-C₅-Thioether, Silyl, Fluor, Chlor, Dialkylamino, Diarylamino, Alkyl-aryl-amino) substituiertes Phenyl oder
substituiertes oder unsubstituiertes Hetero-Sechsring-Aryl mit einem bis zwei Stickstoffatomen oder Hetero-Fünfring-Aryl mit einem bis zwei Heteroatomen aus der Gruppe (N, O, S) oder
einem substituierten oder unsubstituierten zwei- bis dreikernigen Aromaten, bedeuten,
in temperierbaren Mikroreaktoren, deren Auslasskanäle erforderlichenfalls mit mehrere Meter langen Kapillaren oder Schläuchen verbunden sind, wobei die Reaktionslösungen während einer ausreichenden Verweilzeit intensiv vermischt werden.

2. Verfahren nach Anspruch 1, **dadurch gekennzeichnet, dass** als Mikroreaktoren Durchflußreaktoren eingesetzt werden, deren Kanäle einen Durchmesser von 25 bis 2000 Mikrometern aufweisen.

3. Verfahren nach Anspruch 1 oder 2, **dadurch gekennzeichnet, dass** die Durchflussrate im Mikroreaktor so eingestellt wird, dass eine Verweilzeit zwischen einer Sekunde und 10 Minuten erzielt wird.

4. Verfahren nach mindestens einem der vorhergehenden Ansprüche, **dadurch gekennzeichnet, dass** die Reaktion bei Temperaturen im Bereich von -60°C bis + 80°C durchgeführt wird.

5. Verfahren nach mindestens einem der vorhergehenden Ansprüche, **dadurch gekennzeichnet, dass** Lösungen mit einer Konzentration im Bereich von 1 bis 35 Gew.-% eingesetzt werden.

6. Verfahren nach mindestens einem der vorhergehenden Ansprüche, **dadurch gekennzeichnet, dass** Mikroreaktoren in Kombination mit einem Mikromischer eingesetzt werden.
